# EUROPEAN PATENT APPLICATION

(11) **EP 4 575 009 A1**
(43) Date of publication of application: **25.06.2025**
(21) Application number: 23863165.9
(22) Date of filing: 05.09.2023
(51) Int. Cl.: C21D 8/12, C22C 38/00, C22C 38/60, H01F 1/147, H05B 6/10

(54) **METHOD FOR PRODUCING GRAIN-ORIENTED ELECTROMAGNETIC STEEL SHEET, AND INDUCTION HEATER**

(30) Priority: 06.09.2022 JP 2022141254
(71) Applicant: JFE Steel Corporation, Tokyo 100-0011 (JP)
(72) Inventor: SHIMOYAMA, Yusuke, Tokyo 100-0011 (JP); SHINGAKI, Yukihiro, Tokyo 100-0011 (JP); TERASHIMA, Takashi, Tokyo 100-0011 (JP)
(74) Representative: Grünecker Patent- und Rechtsanwälte PartG mbB
(86) International application number: PCT/JP2023/032312
(87) International publication number: WO 2024/053627

(57) **Abstract**

A method for a grain-oriented electrical steel sheet including subjecting a steel material with a predetermined component composition to hot rolling and then to cold rolling to obtain a cold-rolled sheet with a final thickness and subjecting the cold-rolled sheet to decarburization annealing serving as primary recrystallization annealing and then to finishing annealing, in which a final cold-rolling step of the cold rolling includes at least one rolling pass or more performed with the temperature of the steel sheet set in the range of 150°C to 350°C inclusive, and the decarburization annealing includes a heating step in which the steel sheet is heated at an average heating rate of 250°C/s or more from 400°C to a temperature T(°C) of 700 to 900°C and then held at a heating rate of 2/3 of the average heating rate or less in any of temperature ranges between 500°C and 700°C for a time of 0.10 seconds or more but less than 1.00 seconds. Thus, a grain-oriented electrical steel sheet with excellent magnetic properties is obtained. A transverse induction heating device is used for the rapid heating.

## Description

### Technical Field

The present invention relates to a method for producing a grain-oriented electrical steel sheet, and an induction heating device for decarburization annealing used in such a production method.

### Background Art

A grain-oriented electrical steel sheet is a soft magnetic material widely used as an iron core material of a transformer or a generator, and is a steel sheet with excellent magnetic properties that has a crystal structure in which the {110}<001> orientation (Goss orientation), which corresponds to the magnetic easy axis of iron, is highly aligned with the rolling direction of the steel sheet.

As a method for reducing an iron loss in a grain-oriented electrical steel sheet, there is known a method of causing crystal grains to be highly oriented in the Goss orientation after secondary recrystallization annealing. To increase the orientation degree of the secondary recrystallized grains in Goss-orientation, it is important to form a large number of Goss-oriented grains in the texture of the steel sheet at a time point when primary recrystallization is over, and also provide a difference in grain boundary mobility so as to preferentially grow only sharp Goss-oriented grains, that is, to optimize the texture of the steel sheet that has undergone the primary recrystallization.

Examples of a primary recrystallization texture that allows only sharp Goss-oriented grains to be preferentially grown include {111}<112> oriented grains and {411}<148> oriented grains. When such grains are present with a good balance and with high frequency, it is possible to allow Goss-oriented grains to be highly oriented in the rolling direction during secondary recrystallization annealing.

As a method for increasing the proportion of Goss-oriented grains in the texture of a steel sheet after primary recrystallization, for example, Patent Literature 1 discloses a method of performing aging treatment by subjecting a cold-rolled sheet, which is being cold-rolled, to heat treatment at a low temperature. In addition, Patent Literature 2 discloses a method of setting the cooling rate during hot-band annealing to 30°C/s or more or setting the cooling rate during intermediate annealing performed before cold rolling to obtain the final thickness (final cold-rolling step) to 30°C/s or more, and further performing aging treatment between rolling passes two or more times by holding a steel sheet at a temperature of 150 to 300°C for 2 minutes or longer during the final cold-rolling step. Further, Patent Literature 3 discloses a technology for subjecting a steel sheet during cold-rolling to warm rolling by increasing the temperature of the steel sheet so as to utilize dynamic strain aging for immediately pinning a dislocation, which has been introduced through the rolling, by means of C and N.

Each of the technologies of Patent Literatures 1 to 3 above is directed to increasing the temperature of a steel sheet to an appropriate temperature before or during cold rolling, or between consecutive passes of cold rolling, thereby promoting the diffusion of dissolved carbon (C) and nitrogen (N) to pin a dislocation introduced by cold rolling, and thus suppressing the movement of the dislocation so as to promote the shear deformation in the subsequent rolling step and thus improve the rolled texture. This is based on the view that the nuclei of Goss-oriented grains in a primary recrystallization texture appear from shear bands introduced into a processed texture having a {111}<112> orientation. Applying such technologies can introduce a large number of shear bands into the {111}<112> work texture and thus form a large number of Goss-oriented grains in the primary recrystallization texture.

Meanwhile, it is also possible to promote the formation of Goss-oriented grains in a primary recrystallization texture by increasing the heating rate of a steel sheet in a heating step of decarburization annealing. For example, Patent Literature 4 discloses a method of rapidly heating a steel sheet during a heating step of decarburization annealing. Such a technology is intended to suppress the development of a γ-fiber texture({111}//ND), which would be preferentially formed at a typical heating rate, by heating a steel sheet from room temperature to a temperature around the recrystallization temperature in a short time using, for example, electric heating or induction heating and thus promote the generation of Goss-oriented grains as the nuclei of secondary recrystallized grains.

In addition, Patent Literature 5 discloses a method of rapidly heating a steel sheet at an average heating rate of 50°C/s or more in the temperature range of 550 to 700°C during a heating step of decarburization annealing, and also performing temperature maintaining treatment by reducing the heating rate to 10°C/s or less for 1 to 10 seconds in any of temperature ranges between 250 and 550°C. Such a technology is intended to promote the recovery of the {111} work texture by holding a steel sheet at a temperature of 250 to 550°C, which corresponds to the recovery temperature range, for a short time, and thus suppressing recrystallization and relatively increasing the proportion of Goss-oriented grains present.

### Citation List

### Patent Literature

Patent Literature 1: JP-S50-016610
Patent Literature 2: JP-H08-253816
Patent Literature 3: JP-H01-215925
Patent Literature 4: JP-H04-160114
Patent Literature 5: JP-2014-152393

### Summary of Invention

### Technical Problem

However, the technology for pinning a dislocation in the {111}<112> work texture by means of C and N in the middle of cold rolling in order to introduce a large number of shear bands into the work texture in the following cold-rolling step as disclosed in each of Patent Literatures 1 to 3 above has the following problem. That is, if shear bands are introduced excessively, Goss-oriented grains increase while {111}<112> oriented grains in a primary recrystallization texture decrease too much, making it difficult to grow sharp Goss-oriented grains during secondary recrystallization. Therefore, there is a limit to the improvement of magnetic properties with the technologies of Patent Literatures 1 to 3. Further, it has become more difficult to fully respond to the ever-increasing energy-saving demand in recent years.

In addition, according to the method of rapidly heating a steel sheet during heating in decarburization annealing disclosed in Patent Literature 4, Goss-oriented grains increase, but {111}<112> oriented grains decrease. Thus, such a method does not have a sufficient effect of improving magnetic properties, either. Further, according to the technology disclosed in Patent Literature 5, the recrystallization of Goss-oriented grains in the {111}<112> work texture may be hindered depending on the temperature maintaining conditions. Thus, the desired effect of improving magnetic properties cannot be achieved stably, which is problematic.

The present invention has been made in view of the above problems of the conventional technologies, and it is an object of the present invention to propose a method for producing a grain-oriented electrical steel sheet that can solve the foregoing problems and can stably produce a grain-oriented electrical steel sheet with excellent magnetic properties, and also provide an induction heating device for decarburization annealing for use in such a production method.

### Solution to Problem

To solve the above problems, the inventors have focused on the conditions of the aging performed during the cold-rolling step disclosed in each of Patent Literatures 1 to 3 above and the conditions of the temperature maintaining treatment performed during the rapid heating of the decarburization annealing disclosed in Patent Literature 5 above and have conducted concentrated studies on a method for forming Goss-oriented grains and {111}<112> oriented grains of a matrix in a primary recrystallization texture in a well-balanced manner and with high frequency. Consequently, the inventors have developed the present invention by finding that the above problems can be solved by optimizing the conditions of aging performed in the final cold-rolling step and also by optimizing the conditions of temperature maintaining treatment performed during rapid heating in a heating step of decarburization annealing.

The present invention based on the above findings proposes a method for producing a grain-oriented electrical steel sheet, including
hot rolling a steel material to obtain a hot-rolled sheet;
subjecting the hot-rolled sheet to one cold-rolling step, or two or more cold-rolling steps with intermediate annealing interposed between each cold rolling step so as to obtain a cold-rolled sheet with a final thickness; and
subjecting the cold-rolled sheet to decarburization annealing which also serves as primary recrystallization annealing, and then to finishing annealing, characterized in that
a final cold-rolling step of the cold rolling includes at least one rolling pass or more performed with a temperature of the steel sheet set in a range of 150°C to 350°C inclusive, and
the decarburization annealing includes a heating step in which the steel sheet is heated at an average heating rate of 250°C/s or more from 400°C to a temperature T(°C) of 700 to 900°C and then held at a heating rate of 2/3 of the average heating rate or less in any of temperature ranges between 500°C and 700°C for a time of 0.10 seconds or more but less than 1.00 seconds.

The final cold-rolling step in the method for producing a grain-oriented electrical steel sheet of the present invention includes at least one rolling pass or more performed in a temperature range of 30°C to 130°C inclusive, and at least one rolling pass or more performed thereafter in a temperature range of 150°C to 350°C inclusive.

The steel material used in the method for producing a grain-oriented electrical steel sheet of the present invention has a component composition containing elements of the following group A or B, with a balance being Fe and unavoidable impurities:
- group A: C: 0.01 to 0.10 mass%, Si: 2.0 to 4.5 mass%, Mn: 0.01 to 0.50 mass%, Al: 0.0100 to 0.0400 mass%, N: 0.0050 to 0.0120 mass%, and at least one of S and Se: a total of 0.01 to 0.05 mass%, and
- group B: C: 0.01 to 0.10 mass%, Si: 2.0 to 4.5 mass%, Mn: 0.01 to 0.50 mass%, Al: less than 0.0100 mass%, N: 0.0050 mass% or less, S: 0.0070 mass% or less, and Se: 0.0070 mass% or less.

The steel material used in the method for producing a grain-oriented electrical steel sheet of the present invention further contains, in addition to the component composition, at least one element selected from the group consisting of Sb: 0.500 mass% or less, Cu: 1.50 mass% or less, P: 0.500 mass% or less, Cr: 1.50 mass% or less, Ni: 1.500 mass% or less, Sn: 0.50 mass% or less, Nb: 0.0100 mass% or less, Mo: 0.50 mass% or less, B: 0.0070 mass% or less, and Bi: 0.0500 mass% or less.

In the method for producing a grain-oriented electrical steel sheet of the present invention, the rapid heating in the decarburization annealing is performed using a transverse induction heating device.

In addition, the present invention provides a transverse induction heating device for use in the method for producing a grain-oriented electrical steel sheet, including a heating coil having a shape of a rounded rectangle including two parallel lines of equal length lying along a sheet width direction, and two semicircles, characterized in that relationships of R₁≥w and R₂<v are satisfied, where R₁ represents a maximum inner diameter (m) of the heating coil in the sheet width direction, R₂ represents a maximum inner diameter (m) of the heating coil in a threading direction, w represents a width (m) of the steel sheet, and v represents a threading speed (m/s) of the steel sheet.

### Advantageous Effects of Invention

According to the present invention, a grain-oriented electrical steel sheet with excellent magnetic properties can be stably produced, which greatly contributes to achieving energy saving in an electrical device.

### Brief Description of Drawings

[Fig. 1] Fig. 1 is a graph illustrating the influence of the average heating rate as well as the heating rate that is temporarily reduced during decarburization annealing on iron loss.
[Fig. 2] Fig. 2 is a graph illustrating the influence of the time for temporarily reducing the heating rate during rapid heating of decarburization annealing on iron loss.
[Fig. 3] Fig. 3 is a view illustrating an example of a transverse induction heating device used for rapid heating of decarburization annealing in which Fig. 3(a) is a plan view and Fig. 3(b) is a cross-sectional view along the width direction.
[Fig. 4] Fig. 4 is another graph illustrating the influence of the average heating rate as well as the heating rate that is temporarily reduced during decarburization annealing on iron loss.
[Fig. 5] Fig. 5 is another graph illustrating the influence of the time for temporarily reducing the heating rate during rapid heating of decarburization annealing on iron loss.
[Fig. 6] Fig. 6 is a graph illustrating the influence of the end temperature T of rapid heating on iron loss.

### Description of Embodiments

First, experiments conducted to develop the present invention will be described.

To solve the above problems of the conventional technologies, the inventors have conducted the following experiments to examine the heating conditions of decarburization annealing for forming Goss-oriented grains and {111}<112> oriented grains of a matrix in the texture of a steel sheet, which has undergone primary recrystallization, in a well-balanced manner and with high frequency.

### <Experiment 1>

A steel slab, which had a component composition containing no inhibitor-forming component, specifically, containing C: 0.035 mass%, Si: 3.4 mass%, Mn: 0.05 mass%, Al: 0.0086 mass%, N: 0.0050 mass%, S: 0.0031 mass%, and Se: 0.0031 mass%, with the balance being Fe and unavoidable impurities, was heated to 1210°C, and was then hot-rolled so that a hot-rolled sheet with a thickness of 2.0 mm was obtained. Next, each of test pieces obtained from the hot-rolled sheet was subjected to hot-band annealing at 1000°C for 60 seconds, and was then subjected to cold rolling once using a five-stand tandem rolling mill so that a cold-rolled sheet with a final thickness (thickness of the product sheet) of 0.20 mm was obtained. At this time, the third pass was performed as warm rolling with the temperature of the steel sheet on the entry side increased to 200°C.

Next, the cold-rolled sheet was subjected to decarburization annealing, which also serves as primary recrystallization annealing, at a soaking temperature of 840°C for a soaking time of 100 seconds. During a heating step of the decarburization annealing, as shown in Table 1, the average heating rate was varied in the temperature range of 400°C to 750°C, and for some of the test pieces, the heating rate was temporarily reduced under the conditions shown in Table 1 at a time point when the temperature of the steel sheet reached 600°C. Next, an annealing separating agent mainly composed of MgO was applied to the surface of the steel sheet subjected to the decarburization annealing, and then, finishing annealing was performed to cause secondary recrystallization. Next, unreacted portions of the annealing separating agent were removed from the surface of the steel sheet subjected to the finishing annealing. Then, an insulation coating solution containing phosphate, chromate, and colloidal silica in a mass ratio of 3:1:2 was applied to the surface of the steel sheet, and then, flattening annealing was performed at 800°C for 30 seconds to bake the coating and shape the steel sheet at the same time so as to obtain a product sheet.

An Epstein test piece was obtained from the thus-obtained product sheet to measure the iron loss W_{17/50} (iron loss per unit mass at a frequency of 50 Hz and a maximum magnetic flux density of 1.7 T) in accordance with JIS C 2550. The measurement results are shown in Table 1.

**[Table 1]**

| 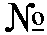 | Heating Conditions of Decarburization Annealing | | | Iron Loss W_{17/50} (W/kg) | Remarks |
|---|---|---|---|---|---|
| | Average Heating Rate (°C/s) from 400°C to 750°C | Upon Reaching 600°C | | | |
| | | Reduced Heating Rate (°C/s) | Reduction Time(s) | | |
| 1 | 200 | - | - | 1.05 | Comparative Example |
| 2 | 225 | - | - | 1.03 | Comparative Example |
| 3 | 250 | - | - | 0.99 | Comparative Example |
| 4 | 275 | - | - | 0.98 | Comparative Example |
| 5 | 300 | - | - | 0.95 | Comparative Example |
| 6 | 325 | - | - | 0.98 | Comparative Example |
| 7 | 350 | - | - | 0.99 | Comparative Example |
| 8 | 375 | - | - | 0.96 | Comparative Example |
| 9 | 400 | - | - | 0.98 | Comparative Example |
| 10 | 425 | - | - | 0.97 | Comparative Example |
| 11 | 450 | - | - | 0.96 | Comparative Example |
| 12 | 500 | - | - | 0.95 | Comparative Example |
| 13 | 200 | 100 | 0.5 | 0.92 | Comparative Example |
| 14 | 225 | 100 | 0.5 | 0.91 | Comparative Example |
| 15 | 250 | 100 | 0.5 | 0.86 | Invention Example |
| 16 | 275 | 100 | 0.5 | 0.85 | Invention Example |
| 17 | 300 | 100 | 0.5 | 0.85 | Invention Example |
| 18 | 325 | 200 | 0.5 | 0.84 | Invention Example |
| 19 | 350 | 200 | 0.5 | 0.84 | Invention Example |
| 20 | 375 | 200 | 0.3 | 0.83 | Invention Example |
| 21 | 400 | 200 | 0.3 | 0.84 | Invention Example |
| 22 | 425 | 250 | 0.3 | 0.82 | Invention Example |
| 23 | 450 | 250 | 0.2 | 0.81 | Invention Example |
| 24 | 500 | 250 | 0.2 | 0.79 | Invention Example |

Table 1 shows that the iron loss W_{17/50} is reduced to 0.87 W/kg or less under the conditions that rapid heating is performed at an average heating rate of 250°C/s or more in the temperature range of 400°C to 750°C during the heating step of the decarburization annealing, and the heating rate is temporarily reduced during the rapid heating. Herein, the iron loss value of 0.87 W/kg is the reference value of the present invention for determining whether the iron loss properties of a grain-oriented electrical steel sheet with a thickness of 0.20 mm are acceptable. The reference value depends on the sheet thickness, and becomes larger as the sheet thickness increases.

The reason that iron loss can be reduced by setting the average heating rate to 250°C/s or more during the heating step of the decarburization annealing and by temporarily reducing the heating rate during the rapid heating as described above has not been fully clarified so far. However, this is considered to be because the heating rate reduced for a short time during the rapid heating has promoted the recrystallization of Goss-oriented grains through the rapid heating and developed the recrystallized {111}<112> oriented grains in a well-balanced manner.

Next, the inventors have conducted the following experiments to examine the influence of the average heating rate of the rapid heating during the heating step of the decarburization annealing as well as the heating rate reduced during the rapid heating on the iron loss properties.

### <Experiment 2>

The cold-rolled sheet produced in <Experiment 1> above was subjected to decarburization annealing, which also serves as primary recrystallization annealing, at a soaking temperature of 840°C for a soaking time of 100 seconds. At this time, the average heating rate was varied in the range of 200 to 500°C/s in the temperature range of 400°C to 750°C during a heating step of the decarburization annealing, and when the temperature of the steel sheet has reached 600°C, the heating rate was varied in the range of 25 to 500°C/s for 0.50 seconds. Next, an annealing separating agent was applied to the steel sheet after the decarburization annealing, as in <Experiment 1> above, and then finishing annealing and flattening annealing were performed to obtain a product sheet. Then, an Epstein test piece was obtained from the product sheet to measure the iron loss W_{17/50}.

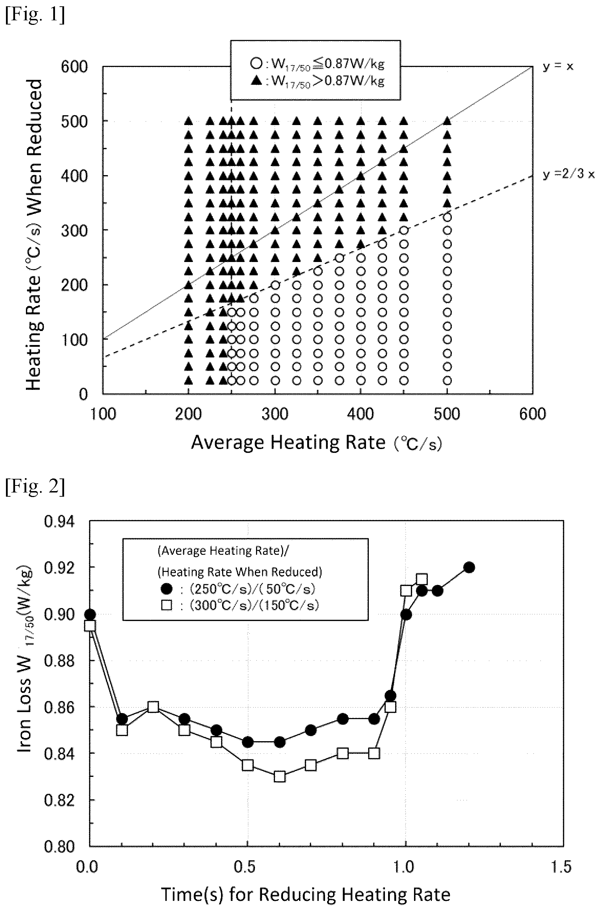

Fig. 1 shows the measurement results as the relationship between the average heating rate in the temperature range of 400°C to 750°C, the heating rate reduced for 0.50 seconds, and the iron loss W_{17/50}. In Fig. 1, the result indicated by "○" shows that the iron loss W_{17/50} is equal to the reference value of 0.87 W/kg or less (which means superior iron loss), while the result indicated by " ▲" shows that the iron loss W_{17/50} is more than the reference value of 0.87 W/kg (which means inferior iron loss).

Fig. 1 shows that the iron loss W_{17/50} was reduced to the reference value of 0.87 W/kg or less under the following conditions: the average heating rate in the temperature range of 400°C to 750°C was set to 250°C/s or more, and the heating rate for the steel sheet was reduced to 2/3 of the average heating rate or less in the temperature range of 400 to 750°C when the temperature of the steel sheet has reached 600°C.

Further, the inventors have conducted the following experiments to examine the time for reducing the heating rate required to reduce iron loss during the heating step of the decarburization annealing.

### <Experiment 3>

While the cold-rolled sheet produced in <Experiment 1> above was subjected to decarburization annealing, which also serves as primary recrystallization annealing, at a soaking temperature of 840°C for a soaking time of 100 seconds, the average heating rate was changed at two levels, that is, to 250°C/s and 300°C/s in the temperature range of 400°C to 750°C during the heating step, and when the temperature of the steel sheet has reached 600°C, the heating rate was reduced to 50°C/s or 150°C/s. At this time, the time for reducing the heating rate was changed variously in the range of 0 to 1.2 seconds. Next, an annealing separating agent was applied to the steel sheet subjected to the decarburization annealing, as in <Experiment 1> above, and then finishing annealing and flattening annealing were performed to obtain a product sheet. Then, an Epstein test piece was obtained from the product sheet to measure the iron loss W_{17/50}.

Fig. 2 shows the measurement results; by setting the time during which the heating rate is reduced, to 0.10 seconds or more but less than 1.00 seconds, the iron loss W_{17/50} is as low as the reference value of 0.87 W/kg or less.

The present invention has been completed by adding further consideration to the foregoing new findings.

Next, the component composition of a steel material used to produce the grain-oriented electrical steel sheet of the present invention will be described.

The steel material used in the present invention is not limited to a particular material as long as it has a known component composition for a grain-oriented electrical steel sheet. However, the steel material preferably contains C, Si, and Mn in the following ranges from a perspective of stably producing a grain-oriented electrical steel sheet with excellent magnetic properties.

### C: 0.01 to 0.10 mass%

C is an element for forming austenite and is a useful element for increasing the maximum fraction of the y phase to obtain a fine texture of a slab. However, when the content of C is less than 0.01 mass%, the fraction of the y phase decreases, making it difficult to obtain a sufficiently fine texture of a slab. Meanwhile, when the content of C exceeds 0.10 mass%, it is difficult to reduce the content of C to 0.0050 mass% or less at which magnetic aging does not occur even by decarburization annealing. Accordingly, the content of C is preferably set in the range of 0.01 to 0.10 mass%. More preferably, the content of C is set in the range of 0.02 to 0.08 mass%.

### Si: 2.0 to 4.5 mass%

Si is an effective element for increasing the specific resistance of steel, and thus reducing iron loss. However, when the content of Si is less than 2.0 mass%, such an effect of reducing iron loss cannot be fully achieved. Meanwhile, when the content of Si is over 4.5 mass%, workability significantly decreases, making it difficult to produce an intended steel sheet through rolling. Accordingly, the content of Si is preferably set in the range of 2.0 to 4.5 mass%. More preferably, the content of Si is set in the range of 2.5 to 4.0 mass%.

### Mn: 0.01 to 0.50 mass%

Mn is an element needed to improve hot workability. When the content of Mn is less than 0.01 mass%, such an effect of improving hot workability cannot be fully achieved. Meanwhile, when the content of Mn is over 0.50 mass%, a primary recrystallization texture degrades, which in turn may make it difficult to obtain a secondary recrystallization texture highly oriented in the Goss orientation. Accordingly, the content of Mn is preferably set in the range of 0.01 to 0.50 mass%. More preferably, the content of Mn is set in the range of 0.03 to 0.30 mass%.

The steel material used in the present invention further preferably contains, when AlN is used as inhibitors for causing secondary recrystallization during the finishing annealing, Al: 0.0100 to 0.0400 mass% and N: 0.0050 to 0.0120 mass% as inhibitor-forming elements, in addition to C, Si, and Mn described above. When each of the content of Al and the content of N is less than its lower limit described above, it is difficult to fully obtain the desired effect of the inhibitors. Meanwhile, when each of the content of Al and the content of N is over its upper limit described above, inhibitors that have precipitated are unevenly dispersed. Thus, it is still difficult to obtain the desired effect of the inhibitors.

Further, in addition to the above inhibitors AlN, it is also possible to use sulfide of Mn (MnS or Cu₂S) or selenide of Mn (MnSe or Cu₂Se) as inhibitors. Such sulfide and selenide may also be used in combination. When sulfide and/or selenide of Mn are/is used as additional inhibitors, the total content of at least one of S and Se is preferably set in the range of 0.01 to 0.05 mass%. When the total content of S and Se is less than the above lower limit, it is difficult to fully obtain the effect of the inhibitors. Meanwhile, when the total content of S and Se is over the above upper limit, the resulting precipitates are unevenly dispersed. Thus, it is still difficult to fully obtain the effect of the inhibitors.

Meanwhile, when no inhibitor is used in order to cause secondary recrystallization during finishing annealing, it is desirable to minimize the content of the inhibitor-forming component. Specifically, the following ranges are preferable: Al: less than 0.0100 mass%, N: 0.0050 mass% or less, S: 0.0070 mass% or less, and Se: 0.0070 mass% or less.

In addition, the steel material used in the present invention may further contain, in addition to the above components, at least one element selected from the group consisting of Sb: 0.500 mass% or less, Cu: 1.50 mass% or less, P: 0.500 mass% or less, Cr: 1.50 mass% or less, Ni: 1.500 mass% or less, Sn: 0.50 mass% or less, Nb: 0.0100 mass% or less, Mo: 0.50 mass% or less, B: 0.0070 mass% or less, and Bi: 0.0500 mass% or less. Each of Sb, Cu, P, Cr, Ni, Sn, Nb, Mo, B, and Bi is a useful element for improving magnetic properties. Thus, the use of such an element in the above range can achieve the effect of improving magnetic properties without hindering the development of secondary recrystallized grains. Note that to reliably achieve the above effect of adding such elements, the following ranges are preferable: Sb: 0.005 mass% or more, Cu: 0.01 mass% or more, P: 0.005 mass% or more, Cr: 0.01 mass% or more, Ni: 0.005 mass% or more, Sn: 0.01 mass% or more, Nb: 0.0005 mass% or more, Mo: 0.01 mass% or more, B: 0.0010 mass% or more, and Bi: 0.0005 mass% or more.

Note that the steel material used in the present invention contains the above components, with the balance being Fe and unavoidable impurities.

Next, a method for producing the grain-oriented electrical steel sheet of the present invention will be described.

A steel material (slab) used for the grain-oriented electrical steel sheet of the present invention is preferably produced by preparing steel with a component composition adjusted to satisfy the above ranges by subjecting molten steel obtained with a converter or an electric furnace, for example, to a commonly known refining process, such as vacuum degassing, for performing secondary refining, and then subjecting the steel to a commonly known continuous casting process or ingot making-blooming process, for example.

Next, the steel material (slab) is heated to a predetermined temperature and then hot-rolled to obtain a hot-rolled sheet. When the slab contains no inhibitor-forming component, the heating temperature for the slab is preferably about 1050°C or higher from a perspective of securing hot rollability. Meanwhile, when the slab contains an inhibitor-forming component, the heating temperature for the slab is preferably about 1200°C or higher from a perspective of dissolving the inhibitor-forming component in the steel. Note that the upper limit of the heating temperature is not specified. However, the heating temperature higher than 1450°C is too close to the melting temperature of the steel, making it difficult to maintain the shape of the slab or increasing scale loss. Thus, the heating temperature is preferably set to 1450°C or lower. The other conditions of the hot rolling may be set to commonly known conditions, and are not specified.

Next, the hot-rolled steel sheet (hot-rolled sheet) may be subjected to hot-band annealing as appropriate. Such hot-band annealing may be performed under known conditions, and the conditions are not limited to particular conditions.

Next, the hot-rolled sheet or the hot-band-annealed steel sheet is descaled by, for example, pickling and is then cold rolled to obtain a cold-rolled sheet with a final thickness (product sheet thickness). Such cold rolling may include one cold-rolling step to obtain a cold-rolled sheet with a final thickness, or two or more cold-rolling steps with intermediate annealing interposed between each cold-rolling step to obtain a cold-rolled sheet with a final thickness.

Note that in the present invention, the cold rolling performed to obtain the final thickness, specifically, a single cold-rolling step performed to obtain the final thickness when the cold rolling includes only one cold-rolling step, or the final cold-rolling step performed to obtain the final thickness when the cold rolling includes two or more cold-rolling steps with intermediate annealing interposed therebetween shall be referred to as a "final cold-rolling step." In addition, a rolling mill used for the cold rolling is not limited to a particular rolling mill, and a known rolling mill, such as a tandem rolling mill, a single-stand reverse rolling mill, a Sendzimir rolling mill, or a planetary rolling mill, can be used.

The rolling reduction in the final cold-rolling step is not specified but is preferably set in the range of 60% to 95% inclusive from a perspective of improving the primary recrystallization texture. When the rolling reduction is less than 60%, the {111}<112> oriented grains and the like in the primary recrystallization texture do not develop sufficiently. This makes Goss-oriented grains less likely to grow through secondary recrystallization. Meanwhile, when the rolling reduction is more than 95%, the steel sheet becomes difficult to be cold-rolled due to work hardening. In addition, the final thickness (product sheet thickness) is preferably set in the range of 0.1 to 1.0 mm. When the final thickness is less than 0.1 mm, productivity decreases, and further, the rigidity of the steel sheet completed as the product sheet is extremely low. In such a case, the sheet is difficult to handle while it is machined into an iron core of a transformer. Meanwhile, when the final thickness exceeds 1.0 mm, an eddy current loss increases, resulting in increased iron loss, which is unfavorable.

Herein, what is important in the present invention is that it is necessary to perform, during the final cold-rolling step, at least one pass or more of warm rolling with the temperature of the steel sheet set in the range of 150°C to 350°C inclusive. Performing the final cold-rolling step at such a temperature can promote the diffusion of dissolved C and N as well as the pinning of a dislocation, which can efficiently introduce shear bands as the sites for forming the nuclei of Goss-oriented grains in the primary recrystallization texture. As described below, the present invention is directed to a technology for developing both Goss-oriented grains and {111}<112> oriented grains in the primary recrystallization texture by optimizing the heating conditions of the heating step of the decarburization annealing. Thus, it is quite important to perform warm rolling, which is effective in increasing the sites for forming the nuclei of Goss-oriented grains, as the final cold-rolling step. When the temperature of the steel sheet during the warm rolling is less than 150°C, sufficient pinning of the dislocation with the dissolved C and N does not occur. In such a case, an increase of Goss-oriented grains in the primary recrystallization texture cannot be expected. Meanwhile, when the temperature of the steel sheet during the warm rolling exceeds 350°C, excessive shear bands are introduced into the {111}<112> work texture. In such a case, the {111}<112> oriented grains are unavoidably reduced after the primary recrystallization, which degrades the magnetic properties of the resulting product sheet. Note that the temperature of the warm rolling (temperature of the steel sheet) is preferably set in the range of 180°C to 300°C inclusive.

In addition, performing at least one rolling pass or more in the temperature range of 30°C to 130°C inclusive and then performing at least one rolling pass or more in the temperature range of 150°C to 350°C inclusive during the final cold-rolling step can further increase Goss-oriented grains in the primary recrystallization texture. Herein, the temperature range of 30°C to 130°C inclusive in the final cold-rolling step is defined as a "low temperature range," while the temperature range of 150° to 350°C inclusive is defined as a "high temperature range." The {111}<112> orientation is an orientation that is stable against rolling, and thus is unlikely to undergo a change in the crystal orientation due to rolling. Thus, performing rolling first in the low temperature range to develop the {111}<112> texture and then performing rolling in the high temperature range can more efficiently introduce shear bands as the sites for forming the nuclei of Goss-oriented grains in the {111}<112> work texture through primary recrystallization. However, when the temperature of the rolling performed in the low temperature range is less than 30°C, cracking is more likely to occur in the steel sheet during the rolling, resulting in lower productivity. Meanwhile, when the temperature of the rolling performed in the low temperature range exceeds 130°C, the effect of developing the {111}<112> texture cannot be obtained. The preferable temperature in the low temperature range is from 40°C to 100°C inclusive.

Note that the combination of rolling performed in the low temperature range and rolling performed thereafter in the high temperature range has only to be performed at least once in the final cold-rolling step. The positions of the rolling pass performed in the low temperature range and the rolling pass performed in the high temperature range are not specified. For example, when the final cold-rolling step includes three passes, it is acceptable to perform rolling in the low temperature range, the high temperature range, and the high temperature range in this order, or perform rolling in the high temperature range, the low temperature range, and the high temperature range in this order. However, the effect of further increasing Goss-oriented grains cannot be expected to be obtained when rolling is performed in the high temperature range, the low temperature range, and the low temperature range in this order; performed in the high temperature range, the high temperature range, and the low temperature range in this order; or performed in the high temperature range, the high temperature range, and the high temperature range in this order.

Herein, a method of heating the steel sheet to the high temperature range of 150°C to 350°C inclusive is not specified and may be a method of heating the steel sheet with heat generated by rolling, a method of heating the steel sheet by induction heating or electric heating, a method of passing the steel sheet through a radiation heating furnace, or a method of bringing the steel sheet into contact with heating rolls. Meanwhile, a method of cooling the steel sheet to the low temperature range of 30°C to 130°C inclusive is also not specified and may be a method of adjusting the temperature of cooling water or coolant during rolling, a method of increasing the interval between consecutive rolling passes, and a method of adjusting the pass schedule to thereby reduce the amount of heat generated by working.

Next, the cold-rolled sheet with the final thickness is subjected to decarburization annealing, which also serves as primary recrystallization annealing, to reduce the content of C is reduced to 0.0050 mass% or less, at which magnetic aging is unlikely to occur. The decarburization conditions (soaking conditions) of the decarburization annealing are not specified, and known conditions may be applied. For example, annealing is preferably performed at 750 to 950°C for 30 to 180 seconds in a wet hydrogen atmosphere.

Herein, what is important in the present invention is that it is necessary to perform rapid heating at an average heating rate of 250°C/s or more in the temperature range of 400°C to a temperature T(°C) of 700 to 900°C during a heating step of the decarburization annealing until the above soaking temperature is reached. When the average heating rate is less than 250°C/s, sufficient primary recrystallization of Goss-oriented grains does not occur, making it difficult to obtain favorable iron loss properties. The preferable average heating rate is 300°C/s or more. Note that the average heating rate of the present invention is the average heating rate during a period including the time for temporarily reducing the heating rate described below.

The temperature T(°C) at which the rapid heating is finished is set to 700 to 900°C. This is because when the upper limit of the rapid heating temperature T(°C) is less than 700°C, sufficient primary recrystallization of Goss-oriented grains does not occur, making it difficult to obtain the effect of the rapid heating. Meanwhile, when the temperature T(°C) exceeds 900°C, secondary recrystallization is hindered due to the decomposition of the inhibitors (AlN) that occurs at high temperatures. In such a case, therefore, favorable iron loss properties cannot be obtained. The preferable temperature T is in the range of 700 to 850°C.

In addition, during the heating step of the decarburization annealing, it is necessary to reduce the heating rate to equal to or less than the average heating rate in the temperature range of 400°C to T(°C), for 0.10 seconds or more but less than 1.00 seconds, in any of temperature ranges between 500°C and 700°C during the rapid heating.

When the temperature at which the heating rate is reduced is less than 500°C, the driving force for the recrystallization of the nuclei of Goss-oriented grains decreases due to recovery. As a result, sufficient recrystallization of the Goss-oriented grains does not occur, and favorable iron loss properties cannot be obtained. Meanwhile, when the temperature at which the heating rate is reduced is higher than 700°C, the recrystallization rate is already high, making it difficult to achieve a sufficient effect of promoting the development of the {111}<112> oriented grains even by reducing the heating rate.

In addition, Fig. 2 shows that it is necessary to reduce the heating rate for a time of 0.10 seconds or more but less than 1.00 seconds. The time for reducing the heating rate of less than 0.10 seconds is too short to achieve the effect of reducing the heating rate. Meanwhile, the time for reducing the heating rate of 1.00 seconds or longer causes the {111}<112> oriented grains to develop excessively, which in turn hinders the subsequent recrystallization of the Goss-oriented grains. In such a case, therefore, favorable iron loss properties cannot be obtained. Preferably, the time for reducing the heating rate is set in the range of 0.20 seconds to 0.70 seconds inclusive.

Further, it is necessary that the heating rate to be temporarily reduced be 2/3 of the average heating rate in the temperature range of 500°C to T(°C) or less. When the heating rate is more than the above, it is difficult to enhance the effect of promoting the development of the {111}<112> oriented grains by reducing the heating rate. Preferably, the heating rate is 1/2 of the average heating rate in the temperature range of 500°C to T(°C) or less. Note that the lower limit of the heating rate to be reduced is not specified but required to be appropriately determined, including the time for reducing the heating rate because the average heating rate in the temperature range of 400°C to T(°C) is required to be set to 250°C/s or more. The preferable lower limit of the heating rate is 0°C/s. Note that the heating rate to be temporarily reduced can be determined by measuring the temperature of the steel sheet during the heating step using, for example, a thermocouple or a radiation thermometer, both of which have a high-speed response, and then time differentiating the measured temperature.

Herein, the rapid heating performed in the heating step of the decarburization annealing as well as a temporal reduction of the heating rate during the rapid heating can be achieved by arranging two or more rapid heating devices, such as electric heating devices or solenoid induction heating devices, in series on a line, and reducing the heating rate in a section between any of the two or more rapid heating devices, and further appropriately adjusting the outputs of the rapid heating devices as well as the threading speed (line speed) of the steel sheet.

However, arranging two or more rapid heating devices as described above would require a large space. Therefore, it is preferable to use, as a rapid heating device, a transverse induction heating device with heating coils, each of which is wound around an iron core, arranged above and below the steel sheet, so that an alternating magnetic flux generated within the iron core can penetrate through the steel sheet in the thickness direction to heat the steel sheet by the action of the magnetic field. In such an induction heating device, an induced current flows within the sheet plane along the shapes of the heating coils, but does not flow through portions of the steel sheet facing the iron cores. Therefore, while the steel sheet passes through a region around the iron cores, a phenomenon occurs in which the heating rate is temporarily reduced. Further, such a reduction in the heating rate occurs within a single induction heating device, which does not cause any problem with the installation space for the device. Therefore, a transverse induction heating device is preferable and suitable for the present invention.

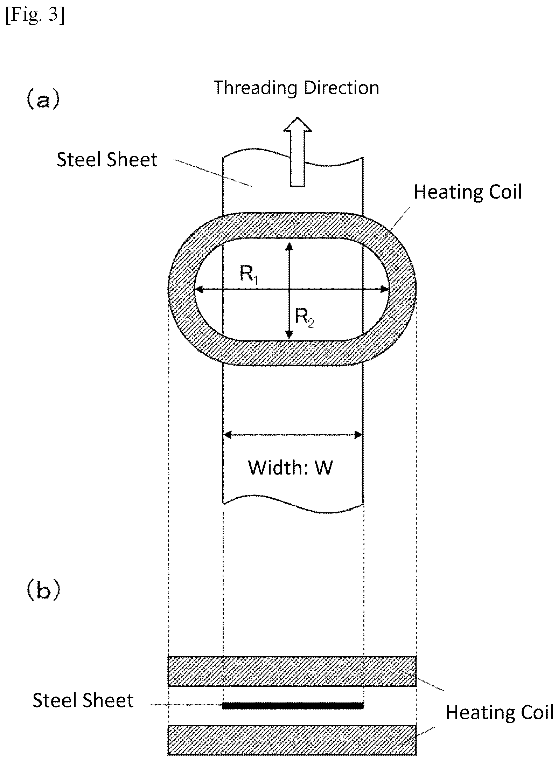

The shape of each heating coil of the transverse induction heating device is not specified and may be any of round, quadrilateral, and elliptical shapes, for example. Fig. 3 shows an example of a heating coil with the shape of a rounded rectangle including two parallel lines of equal length and two semicircles. When using a transverse induction heating device including a heating coil with such a shape, it is preferable to satisfy the relationships of R₁≥w and R₂<v, where R₁ represents the maximum inner diameter (m) of the heating coil in the sheet width direction, R₂ represents the maximum inner diameter (m) of the heating coil in the threading direction (which corresponds to the inner diameter at the central position of the steel sheet in the width direction in Fig. 3), w represents the width (m) of the steel sheet, and v represents the threading speed (m/s) of the steel sheet. The relationship R₁≥w represents the condition necessary to generate an induced current through the entire surface of the steel sheet, while the relationship R₂<v represents the condition necessary to suppress the time for reducing the heating rate to less than 1.00 seconds.

Next, an annealing separating agent is applied to the surface of the cold-rolled steel sheet that has been subjected to the decarburization annealing. Then, finishing annealing for causing secondary recrystallization is performed. The annealing separating agent can be any known annealing separating agent and is not specified. Examples of the annealing separating agent include an agent mainly composed of MgO and also containing an auxiliary agent, such as TiO₂, as appropriate, and an agent mainly composed of SiO₂ or Al₂O₃.

Unreacted portions of the annealing separating agent remaining on the surface of the steel sheet subjected to the finishing annealing are removed therefrom. Then, it is preferable to apply an insulation coating solution to the surface of the steel sheet and then perform flattening annealing to bake the coating and shape the steel sheet, which has a degraded shape due to the finishing annealing, at the same time so as to obtain a product sheet. Note that the insulation coating may be formed through a different line. The type of such an insulation coating is not specified. However, to form a tension-imparting insulation coating, which imparts tension to the surface of the steel sheet, it is preferable to apply slurry containing phosphate and colloidal silica to the surface of the steel sheet, and then bake the slurry at a temperature of about 800°C, as disclosed in Japanese Patent Laid-Open No. 50-79442, Japanese Patent Laid-Open No. 48-39338, Japanese Patent Laid-Open No. 56-75579, and the like.

Note that when a further reduction of iron loss is required, magnetic domain subdividing treatment may be performed using a known method, such as by forming a groove in the surface of the steel sheet in any one of the steps following the cold rolling, or by mechanically forming a strain region in the surface of the steel sheet or forming a thermal strain region in the surface of the steel sheet by irradiating it with a laser beam or an electron beam, for example, after the finishing annealing.

### Example 1

A steel slab, which had a component composition containing inhibitor-forming components, specifically, containing C: 0.06 mass%, Si: 3.4 mass%, Mn: 0.06 mass%, Al: 0.0250 mass%, N: 0.0090 mass%, S: 0.01 mass%, and Se: 0.01 mass%, with the balance being Fe and unavoidable impurities, was heated to 1400°C and then hot-rolled to obtain a hot-rolled sheet with a thickness of 2.0 mm. The hot-rolled sheet was then subjected to a first cold-rolling step by a tandem rolling mill to obtain an intermediate thickness of 1.2 mm and then to intermediate annealing at 1100°C for 80 seconds in an atmosphere of N₂: 75 vol% + H₂: 25 vol% with a dew point of 46°C. The sheet was then subjected to a second cold-rolling step (final cold-rolling step) by a Sendzimir rolling mill to obtain a cold-rolled sheet with a final thickness of 0.20 mm. At this time, the final cold-rolling step was performed in six passes, and the fourth pass was performed as warm rolling with the temperature of the steel sheet on the entry side set to 250°C.

The cold-rolled sheet was then subjected to decarburization annealing which also serves as primary recrystallization annealing at a soaking temperature of 840°C for a soaking time of 100 seconds. During a heating step of the decarburization annealing, as shown in Table 2, the average heating rate was varied in the temperature range of 400°C to 770°C. In addition, for some of the cold-rolled sheets, the heating rate for the steel sheet was temporarily reduced as shown in Table 2 when the temperature of the steel sheet reached 550°C. Next, an annealing separating agent mainly composed of MgO was applied to the surface of the cold-rolled steel sheet subjected to the decarburization annealing, and then finishing annealing for causing secondary recrystallization was performed. Next, unreacted portions of the annealing separating agent were removed from the surface of the steel sheet subjected to the finishing annealing. Then, an insulation coating solution containing phosphate, chromate, and colloidal silica in a mass ratio of 3:1:2 was applied to the surface of the steel sheet, followed by flattening annealing at 800°C for 30 seconds to bake the coating and correct the shape, whereby a product sheet was obtained.

An Epstein test piece was obtained from the thus-obtained product sheet to measure the iron loss W_{17/50} in accordance with JIS C 2550. Table 2 shows the measurement results.

Table 2 confirms that even when a grain-oriented electrical steel sheet is produced by using a steel slab containing an inhibitor-forming component, or even when intermediate annealing is performed between cold-rolling steps, it is possible to reduce the iron loss W_{17/50} to the reference value of 0.87 W/kg or less by setting the average heating rate to 250°C/s or more in the temperature range of 400°C to 770°C during the heating step of the decarburization annealing, and also by reducing the heating rate for a short time, which is 0.10 seconds or more but less than 1.00 seconds, during the heating step.

**[Table 2]**

| 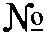 | Heating Conditions of Decarburization Annealing | | | Iron Loss W_{17/50} (W/kg) | Remarks |
|---|---|---|---|---|---|
| | Average Heating Rate (°C/s) from 400°C to 770°C | Upon Reaching 550°C | | | |
| | | Reduced Heating rate(°C/s) | Reduction Time(s) | | |
| 1 | 200 | - | - | 1.02 | Comparative Example |
| 2 | 225 | - | - | 1.00 | Comparative Example |
| 3 | 250 | - | - | 0.99 | Comparative Example |
| 4 | 275 | - | - | 0.98 | Comparative Example |
| 5 | 300 | - | - | 0.96 | Comparative Example |
| 6 | 325 | - | - | 0.94 | Comparative Example |
| 7 | 350 | - | - | 0.95 | Comparative Example |
| 8 | 375 | - | - | 0.96 | Comparative Example |
| 9 | 400 | - | - | 0.95 | Comparative Example |
| 10 | 425 | - | - | 0.94 | Comparative Example |
| 11 | 450 | - | - | 0.93 | Comparative Example |
| 12 | 500 | - | - | 0.95 | Comparative Example |
| 13 | 200 | 100 | 0.5 | 0.91 | Comparative Example |
| 14 | 225 | 100 | 0.5 | 0.92 | Comparative Example |
| 15 | 250 | 100 | 0.5 | 0.85 | Invention Example |
| 16 | 275 | 100 | 0.5 | 0.83 | Invention Example |
| 17 | 300 | 100 | 0.5 | 0.81 | Invention Example |
| 18 | 325 | 200 | 0.5 | 0.82 | Invention Example |
| 19 | 350 | 200 | 0.5 | 0.81 | Invention Example |
| 20 | 375 | 200 | 0.3 | 0.80 | Invention Example |
| 21 | 400 | 200 | 0.3 | 0.80 | Invention Example |
| 22 | 425 | 250 | 0.3 | 0.81 | Invention Example |
| 23 | 450 | 250 | 0.2 | 0.81 | Invention Example |
| 24 | 500 | 250 | 0.2 | 0.80 | Invention Example |

### Example 2

The cold-rolled sheet with the final thickness produced in Example 1 above was subjected to decarburization annealing, which also serves as primary recrystallization annealing, at a soaking temperature of 840°C for a soaking time of 100 seconds. During the heating step of the decarburization annealing, the average heating rate in the temperature range of 400°C to 800°C was varied in the range of 200 to 500°C/s, and after the temperature of the steel sheet reached 650°C, the heating rate was reduced for only 0.30 seconds to various rates in the range of 25 to 500°C/s. Next, an annealing separating agent mainly composed of MgO was applied to the surface of the cold-rolled sheet subjected to the decarburization annealing, and then finishing annealing for causing secondary recrystallization was performed. Next, unreacted portions of the annealing separating agent were removed from the surface of the steel sheet subjected to the finishing annealing. Then, an insulation coating solution containing phosphate, chromate, and colloidal silica in a mass ratio of 3:1:2 was applied to the surface of the steel sheet, followed by flattening annealing at 800°C for 30 seconds to obtain a product sheet.

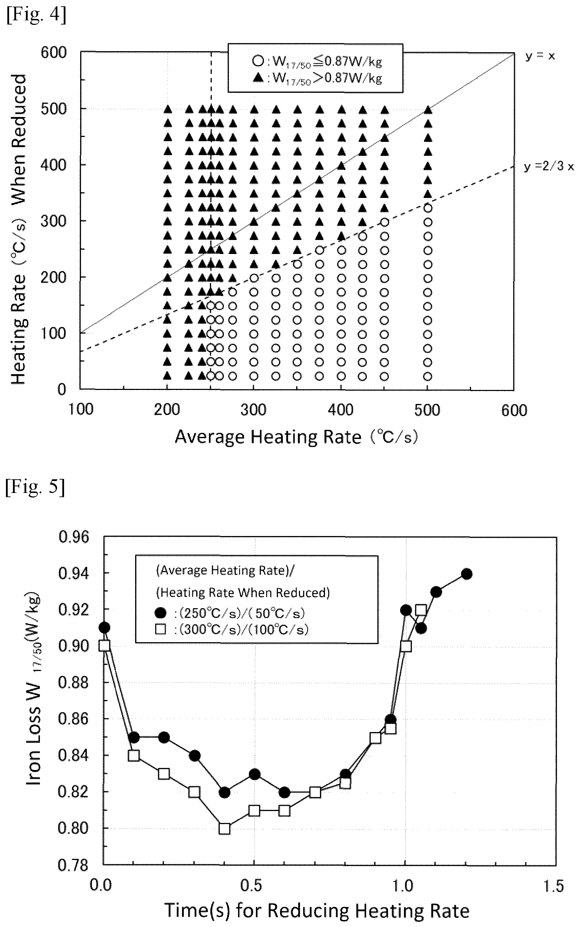

An Epstein test piece was obtained from the thus-obtained product sheet to measure the iron loss W_{17/50} in accordance with JIS C 2550. Fig. 4 shows the measurement results as the relationship between the average heating rate in the temperature range of 400°C to 800°C as well as the heating rate reduced for 0.30 seconds during the decarburization annealing and iron loss. In Fig. 4, the result indicated by "O" shows that the iron loss W_{17/50} is equal to or less than the reference value of 0.87 W/kg, while the result indicated by "▲" shows that the iron loss W_{17/50} is more than the reference value of 0.87 W/kg.

Fig. 4 shows that even when a steel slab containing an inhibitor-forming component is used, or even when intermediate annealing is performed between cold-rolling steps, it is possible to reduce the iron loss W_{17/50} to the reference value of 0.87 W/kg or less by setting the average heating rate to 250°C/s or more in the temperature range of 400°C to 800°C during the decarburization annealing and also by reducing the heating rate to 2/3 of the average heating rate or less during the heating step.

### Example 3

The cold-rolled sheet with the final thickness produced in Example 1 above was subjected to decarburization annealing, which also serves as primary recrystallization annealing, at a soaking temperature of 840°C for a soaking time of 100 seconds. During the heating step of the decarburization annealing, the average heating rate in the temperature range of 400°C to 750°C was changed at two levels, that is, to 250°C/s and 300°C/s. Further, when the temperature of the steel sheet reached 500°C in the heating step, the heating rate was reduced to 50°C/s or 100°C/s, and the time for reducing the heating rate was varied in the range of 0 to 1.2 seconds. Next, an annealing separating agent mainly composed of MgO was applied to the surface of the cold-rolled steel sheet subjected to the decarburization annealing, and then, finishing annealing for causing secondary recrystallization was performed. Unreacted portions of the annealing separating agent were removed from the surface of the steel sheet subjected to the finishing annealing. Then, an insulation coating solution containing phosphate, chromate, and colloidal silica in a mass ratio of 3:1:2 was applied to the surface of the steel sheet, followed by flattening annealing at 800°C for 30 seconds to obtain a product sheet.

An Epstein test piece was obtained from the thus-obtained product sheet to measure the iron loss W_{17/50} in accordance with JIS C 2550. Fig. 5 shows the measurement results; each steel sheet, obtained by reducing the heating rate for a time of 0.10 seconds or more but less than 1.00 seconds during the rapid heating of the decarburization annealing, has the iron loss W_{17/50} reduced to the reference value of 0.87 W/kg or less.

### Example 4

The following two types of steel slabs A and B were each heated to 1300°C and then hot-rolled to produce a hot-rolled sheet with a thickness of 2.0 mm.
- Steel slab A: a steel slab with a component composition containing no inhibitor-forming component, specifically, containing C: 0.035 mass%, Si: 3.3 mass%, Mn: 0.05 mass%, Al: 0.0084 mass%, N: 0.0051 mass%, S: 0.0031 mass%, and Se: 0.0031 mass%, with the balance being Fe and unavoidable impurities
- Steel slab B: a steel slab with a component composition containing inhibitor-forming components, specifically, containing C: 0.06 mass%, Si: 3.4 mass%, Mn: 0.06 mass%, Al: 0.0250 mass%, N: 0.0095 mass%, S: 0.01 mass%, and Se: 0.01 mass%, with the balance being Fe and unavoidable impurities

Next, a test piece was obtained from the hot-rolled sheet produced from the steel slab A and subjected to hot-band annealing at 1000°C for 60 seconds and then to single cold rolling (final cold-rolling step) with a Sendzimir rolling mill to obtain a cold-rolled sheet with a final thickness of 0.20 mm. Meanwhile, a test piece was also obtained from the hot-rolled sheet produced from the steel slab B and subjected to a first cold-rolling step by a tandem rolling mill to obtain an intermediate thickness of 1.2 mm and to intermediate annealing at 1100°C for 80 seconds in an atmosphere of N₂: 75 vol% + H₂: 25 vol% with a dew point of 46°C. Then, the sheet was subjected to a second cold-rolling step (final cold-rolling step) by a tandem rolling mill to obtain a cold-rolled sheet with a final thickness of 0.20 mm. At this time, each final cold-rolling step was performed in 4 passes, and the temperature of the steel sheet on the entry side was varied in each pass as shown in Table 3.

Next, the cold-rolled sheet was subjected to decarburization annealing, which also acts as primary recrystallization annealing, at a soaking temperature of 840°C for a soaking time of 100 seconds. During a heating step of the decarburization annealing, rapid heating was performed at an average heating rate of 260°C/s in the temperature range of 400°C to 710°C, using the transverse induction heating device shown in Fig. 3. In addition, at a time when the temperature of the sheet reached 550°C, the output of the induction heating device was adjusted to reduce the heating rate to 100°C/s for 0.2 seconds.

Next, an annealing separating agent was applied to the surface of the cold-rolled steel sheet subjected to the decarburization annealing as in Example 1, followed by finishing annealing to cause secondary recrystallization. Then, unreacted portions of the annealing separating agent were removed from the surface of the steel sheet subjected to the finishing annealing. Then, an insulation coating solution containing phosphate, chromate, and colloidal silica in a mass ratio of 3:1:2 was applied to the surface of the steel sheet, followed by flattening annealing at 800°C for 30 seconds to obtain a product sheet.

An Epstein test piece was taken from the thus-obtained product sheet to measure the iron loss W_{17/50} in accordance with JIS C 2550. Table 3 shows the measurement results; each of the steel sheets subjected to the final cold-rolling step including at least one rolling pass in the temperature range of 150°C to 350°C inclusive has the iron loss W_{17/50} reduced to the reference value of 0.87 W/kg or less. Further, it also shows that each of the steel sheets subjected to the final cold-rolling step including at least one rolling pass in the temperature range of 30°C to 130°C inclusive, and also at least one rolling pass thereafter in the temperature range of 150°C to 350°C inclusive, has the iron loss W_{17/50} of 0.82 W/kg or less, and thus is even lower.

**[Table 3-1]**

| Steel Sheet 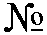 | Steel Symbol | Steel Sheet Temperature (°C) at Final Cold Rolling | | | | Iron Loss W_{17/50} (W/kg) | Remarks |
|---|---|---|---|---|---|---|---|
| | | First Pass | Second Pass | Third Pass | Forth Pass | | |
| 1 | A | 100 | 100 | 100 | 100 | 0.96 | Comparative Example |
| 2 | A | 110 | 100 | 100 | 100 | 0.96 | Comparative Example |
| 3 | A | 120 | 100 | 100 | 100 | 1.01 | Comparative Example |
| 4 | A | 130 | 100 | 100 | 100 | 0.93 | Comparative Example |
| 5 | A | 140 | 100 | 100 | 100 | 0.92 | Comparative Example |
| 6 | A | 150 | 100 | 100 | 100 | 0.86 | Invention Example |
| 7 | A | 160 | 100 | 100 | 100 | 0.85 | Invention Example |
| 8 | A | 170 | 100 | 100 | 100 | 0.84 | Invention Example |
| 9 | A | 180 | 100 | 100 | 100 | 0.86 | Invention Example |
| 10 | A | 190 | 100 | 100 | 100 | 0.85 | Invention Example |
| 11 | A | 200 | 100 | 100 | 100 | 0.84 | Invention Example |
| 12 | A | 250 | 100 | 100 | 100 | 0.83 | Invention Example |
| 13 | A | 260 | 100 | 100 | 100 | 0.84 | Invention Example |
| 14 | A | 270 | 100 | 100 | 100 | 0.85 | Invention Example |
| 15 | A | 280 | 100 | 100 | 100 | 0.85 | Invention Example |
| 16 | A | 290 | 100 | 100 | 100 | 0.87 | Invention Example |
| 17 | A | 300 | 100 | 100 | 100 | 0.85 | Invention Example |
| 18 | A | 310 | 100 | 100 | 100 | 0.83 | Invention Example |
| 19 | A | 320 | 100 | 100 | 100 | 0.87 | Invention Example |
| 20 | A | 330 | 100 | 100 | 100 | 0.84 | Invention Example |
| 21 | A | 340 | 100 | 100 | 100 | 0.86 | Invention Example |
| 22 | A | 350 | 100 | 100 | 100 | 0.84 | Invention Example |
| 23 | A | 360 | 100 | 100 | 100 | 0.95 | Comparative Example |
| 24 | A | 370 | 100 | 100 | 100 | 0.89 | Comparative Example |
| 25 | A | 380 | 100 | 100 | 100 | 0.96 | Comparative Example |
| 26 | A | 390 | 100 | 100 | 100 | 0.90 | Comparative Example |
| 27 | A | 400 | 100 | 100 | 100 | 1.00 | Comparative Example |
| 28 | A | 100 | 110 | 100 | 100 | 0.95 | Comparative Example |
| 29 | A | 100 | 120 | 100 | 100 | 0.93 | Comparative Example |
| 30 | A | 100 | 130 | 100 | 100 | 0.93 | Comparative Example |
| 31 | A | 100 | 140 | 100 | 100 | 0.97 | Comparative Example |
| 32 | A | 100 | 150 | 100 | 100 | 0.81 | Invention Example |
| 33 | A | 100 | 160 | 100 | 100 | 0.80 | Invention Example |
| 34 | A | 100 | 170 | 100 | 100 | 0.80 | Invention Example |
| 35 | A | 100 | 180 | 100 | 100 | 0.80 | Invention Example |
| 36 | A | 100 | 190 | 100 | 100 | 0.80 | Invention Example |
| 37 | A | 100 | 200 | 100 | 100 | 0.80 | Invention Example |
| 38 | A | 100 | 250 | 100 | 100 | 0.80 | Invention Example |
| 39 | A | 100 | 260 | 100 | 100 | 0.81 | Invention Example |
| 40 | A | 100 | 270 | 100 | 100 | 0.80 | Invention Example |
| 41 | A | 100 | 280 | 100 | 100 | 0.80 | Invention Example |
| 42 | A | 100 | 290 | 100 | 100 | 0.81 | Invention Example |
| 43 | A | 100 | 300 | 100 | 100 | 0.81 | Invention Example |
| 44 | A | 100 | 310 | 100 | 100 | 0.80 | Invention Example |
| 45 | A | 100 | 320 | 100 | 100 | 0.81 | Invention Example |
| 46 | A | 100 | 330 | 100 | 100 | 0.81 | Invention Example |
| 47 | A | 100 | 340 | 100 | 100 | 0.81 | Invention Example |
| 48 | A | 100 | 350 | 100 | 100 | 0.80 | Invention Example |
| 49 | A | 100 | 360 | 100 | 100 | 0.93 | Comparative Example |
| 50 | A | 100 | 370 | 100 | 100 | 0.89 | Comparative Example |
| 51 | A | 100 | 380 | 100 | 100 | 0.97 | Comparative Example |
| 52 | A | 100 | 390 | 100 | 100 | 0.91 | Comparative Example |
| 53 | A | 100 | 400 | 100 | 100 | 0.97 | Comparative Example |

**[Table 3-2]**

| Steel Sheet _{º} | Steel Symbol | Steel Sheet Temperature(°C) at Final Cold Rolling | | | | Iron Loss W_{17/50} (W/kg) | Remarks |
|---|---|---|---|---|---|---|---|
| | | First Pass | Second Pass | Third Pass | Forth Pass | | |
| 54 | A | 100 | 100 | 110 | 100 | 0.99 | Comparative Example |
| 55 | A | 100 | 100 | 120 | 100 | 0.90 | Comparative Example |
| 56 | A | 100 | 100 | 130 | 100 | 0.93 | Comparative Example |
| 57 | A | 100 | 100 | 140 | 100 | 0.95 | Comparative Example |
| 58 | A | 100 | 100 | 150 | 100 | 0.80 | Invention Example |
| 59 | A | 100 | 100 | 160 | 100 | 0.80 | Invention Example |
| 60 | A | 100 | 100 | 170 | 100 | 0.81 | Invention Example |
| 61 | A | 100 | 100 | 180 | 100 | 0.81 | Invention Example |
| 62 | A | 100 | 100 | 190 | 100 | 0.81 | Invention Example |
| 63 | A | 100 | 100 | 200 | 100 | 0.81 | Invention Example |
| 64 | A | 100 | 100 | 250 | 100 | 0.81 | Invention Example |
| 65 | A | 100 | 100 | 260 | 100 | 0.80 | Invention Example |
| 66 | A | 100 | 100 | 270 | 100 | 0.80 | Invention Example |
| 67 | A | 100 | 100 | 280 | 100 | 0.80 | Invention Example |
| 68 | A | 100 | 100 | 290 | 100 | 0.80 | Invention Example |
| 69 | A | 100 | 100 | 300 | 100 | 0.81 | Invention Example |
| 70 | A | 100 | 100 | 310 | 100 | 0.81 | Invention Example |
| 71 | A | 100 | 100 | 320 | 100 | 0.80 | Invention Example |
| 72 | A | 100 | 100 | 330 | 100 | 0.81 | Invention Example |
| 73 | A | 100 | 100 | 340 | 100 | 0.80 | Invention Example |
| 74 | A | 100 | 100 | 350 | 100 | 0.80 | Invention Example |
| 75 | A | 100 | 100 | 360 | 100 | 0.89 | Comparative Example |
| 76 | A | 100 | 100 | 370 | 100 | 0.89 | Comparative Example |
| 77 | A | 100 | 100 | 380 | 100 | 0.91 | Comparative Example |
| 78 | A | 100 | 100 | 390 | 100 | 0.89 | Comparative Example |
| 79 | A | 100 | 100 | 400 | 100 | 0.99 | Comparative Example |
| 80 | A | 100 | 100 | 100 | 110 | 0.94 | Comparative Example |
| 81 | A | 100 | 100 | 100 | 120 | 0.91 | Comparative Example |
| 82 | A | 100 | 100 | 100 | 130 | 0.98 | Comparative Example |
| 83 | A | 100 | 100 | 100 | 140 | 0.98 | Comparative Example |
| 84 | A | 100 | 100 | 100 | 150 | 0.80 | Invention Example |
| 85 | A | 100 | 100 | 100 | 160 | 0.81 | Invention Example |
| 86 | A | 100 | 100 | 100 | 170 | 0.80 | Invention Example |
| 87 | A | 100 | 100 | 100 | 180 | 0.81 | Invention Example |
| 88 | A | 100 | 100 | 100 | 190 | 0.81 | Invention Example |
| 89 | A | 100 | 100 | 100 | 200 | 0.81 | Invention Example |
| 90 | A | 100 | 100 | 100 | 250 | 0.80 | Invention Example |
| 91 | A | 100 | 100 | 100 | 260 | 0.80 | Invention Example |
| 92 | A | 100 | 100 | 100 | 270 | 0.80 | Invention Example |
| 93 | A | 100 | 100 | 100 | 280 | 0.81 | Invention Example |
| 94 | A | 100 | 100 | 100 | 290 | 0.80 | Invention Example |
| 95 | A | 100 | 100 | 100 | 300 | 0.81 | Invention Example |
| 96 | A | 100 | 100 | 100 | 310 | 0.80 | Invention Example |
| 97 | A | 100 | 100 | 100 | 320 | 0.80 | Invention Example |
| 98 | A | 100 | 100 | 100 | 330 | 0.81 | Invention Example |
| 99 | A | 100 | 100 | 100 | 340 | 0.81 | Invention Example |
| 100 | A | 100 | 100 | 100 | 350 | 0.81 | Invention Example |
| 101 | A | 100 | 100 | 100 | 360 | 0.95 | Comparative Example |
| 102 | A | 100 | 100 | 100 | 370 | 0.91 | Comparative Example |
| 103 | A | 100 | 100 | 100 | 380 | 0.99 | Comparative Example |
| 104 | A | 100 | 100 | 100 | 390 | 0.95 | Comparative Example |
| 105 | A | 100 | 100 | 100 | 400 | 0.92 | Comparative Example |

**[Table 3-3]**

| Steel Sheet 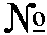 | Steel Symbol | Steel Sheet Temperature(°C) at Final Cold Rolling | | | | Iron Loss W_{17/50} (W/kg) | Remarks |
|---|---|---|---|---|---|---|---|
| | | First Pass | Second Pass | Third Pass | Forth Pass | | |
| 106 | A | 150 | 150 | 50 | 50 | 0.83 | Invention Example |
| 107 | A | 200 | 200 | 50 | 50 | 0.85 | Invention Example |
| 108 | A | 300 | 300 | 50 | 50 | 0.85 | Invention Example |
| 109 | A | 350 | 350 | 50 | 50 | 0.85 | Invention Example |
| 110 | A | 150 | 50 | 350 | 50 | 0.81 | Invention Example |
| 111 | A | 200 | 50 | 300 | 50 | 0.80 | Invention Example |
| 112 | A | 300 | 50 | 200 | 50 | 0.80 | Invention Example |
| 113 | A | 350 | 50 | 150 | 50 | 0.81 | Invention Example |
| 114 | A | 150 | 50 | 50 | 150 | 0.81 | Invention Example |
| 115 | A | 200 | 50 | 50 | 200 | 0.80 | Invention Example |
| 116 | A | 300 | 50 | 50 | 300 | 0.80 | Invention Example |
| 117 | A | 350 | 50 | 50 | 350 | 0.80 | Invention Example |
| 118 | A | 50 | 150 | 150 | 50 | 0.81 | Invention Example |
| 119 | A | 50 | 200 | 200 | 50 | 0.80 | Invention Example |
| 120 | A | 50 | 300 | 300 | 50 | 0.81 | Invention Example |
| 121 | A | 50 | 350 | 350 | 50 | 0.81 | Invention Example |
| 122 | A | 50 | 150 | 50 | 150 | 0.80 | Invention Example |
| 123 | A | 50 | 200 | 50 | 200 | 0.81 | Invention Example |
| 124 | A | 50 | 300 | 50 | 300 | 0.80 | Invention Example |
| 125 | A | 50 | 350 | 50 | 350 | 0.80 | Invention Example |
| 126 | A | 50 | 50 | 150 | 150 | 0.80 | Invention Example |
| 127 | A | 50 | 50 | 200 | 200 | 0.80 | Invention Example |
| 128 | A | 50 | 50 | 300 | 300 | 0.80 | Invention Example |
| 129 | A | 50 | 50 | 350 | 350 | 0.80 | Invention Example |
| 130 | A | 150 | 350 | 150 | 50 | 0.85 | Invention Example |
| 131 | A | 200 | 300 | 200 | 50 | 0.83 | Invention Example |
| 132 | A | 300 | 200 | 300 | 50 | 0.86 | Invention Example |
| 133 | A | 350 | 150 | 350 | 50 | 0.85 | Invention Example |
| 134 | A | 150 | 350 | 50 | 150 | 0.80 | Invention Example |
| 135 | A | 200 | 300 | 50 | 200 | 0.80 | Invention Example |
| 136 | A | 300 | 200 | 50 | 300 | 0.81 | Invention Example |
| 137 | A | 350 | 150 | 50 | 350 | 0.81 | Invention Example |
| 138 | A | 150 | 50 | 150 | 150 | 0.80 | Invention Example |
| 139 | A | 200 | 50 | 200 | 200 | 0.80 | Invention Example |
| 140 | A | 300 | 50 | 300 | 300 | 0.80 | Invention Example |
| 141 | A | 350 | 50 | 350 | 350 | 0.81 | Invention Example |
| 142 | A | 50 | 150 | 150 | 150 | 0.80 | Invention Example |
| 143 | A | 50 | 200 | 200 | 200 | 0.81 | Invention Example |
| 144 | A | 50 | 300 | 300 | 300 | 0.81 | Invention Example |
| 145 | A | 50 | 350 | 350 | 350 | 0.80 | Invention Example |
| 146 | A | 150 | 150 | 150 | 150 | 0.86 | Invention Example |
| 147 | A | 200 | 200 | 200 | 200 | 0.87 | Invention Example |
| 148 | A | 300 | 300 | 300 | 300 | 0.84 | Invention Example |
| 149 | A | 350 | 350 | 350 | 350 | 0.87 | Invention Example |

**[Table 3-4]**

| Steel Sheet _{º} | Steel Symbol | Steel Sheet Temperature(°C) at Final Cold Rolling | | | | Iron Loss W_{17/50} (W/kg) | Remarks |
|---|---|---|---|---|---|---|---|
| | | First Pass | Second Pass | Third Pass | Forth Pass | | |
| 150 | A | 0 | 200 | 200 | 200 | 0.87 (Frequent Cracking During Cold Rolling) | Invention Example |
| 151 | A | 10 | 200 | 200 | 200 | 0.84 (Frequent Cracking During Cold Rolling) | Invention Example |
| 152 | A | 20 | 200 | 200 | 200 | 0.87 (Frequent Cracking During Cold Rolling) | Invention Example |
| 153 | A | 30 | 200 | 200 | 200 | 0.80 | Invention Example |
| 154 | A | 40 | 200 | 200 | 200 | 0.80 | Invention Example |
| 155 | A | 50 | 200 | 200 | 200 | 0.81 | Invention Example |
| 156 | A | 100 | 200 | 200 | 200 | 0.81 | Invention Example |
| 157 | A | 110 | 200 | 200 | 200 | 0.80 | Invention Example |
| 158 | A | 120 | 200 | 200 | 200 | 0.81 | Invention Example |
| 159 | A | 130 | 200 | 200 | 200 | 0.80 | Invention Example |
| 160 | A | 140 | 200 | 200 | 200 | 0.85 | Invention Example |
| 161 | A | 150 | 200 | 200 | 200 | 0.85 | Invention Example |

**[Table 3-5]**

| Steel Sheet 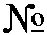 | Steel Symbol | Steel Sheet Temperature(°C) of Final Cold Rolling | | | | Iron Loss W_{17/50} (W/kg) | Remarks |
|---|---|---|---|---|---|---|---|
| | | First Pass | Second Pass | Third Pass | Forth Pass | | |
| 162 | B | 100 | 100 | 100 | 100 | 0.94 | Comparative Example |
| 163 | B | 110 | 100 | 100 | 100 | 0.91 | Comparative Example |
| 164 | B | 120 | 100 | 100 | 100 | 0.92 | Comparative Example |
| 165 | B | 130 | 100 | 100 | 100 | 0.98 | Comparative Example |
| 166 | B | 140 | 100 | 100 | 100 | 0.88 | Comparative Example |
| 167 | B | 150 | 100 | 100 | 100 | 0.86 | Invention Example |
| 168 | B | 160 | 100 | 100 | 100 | 0.87 | Invention Example |
| 169 | B | 170 | 100 | 100 | 100 | 0.85 | Invention Example |
| 170 | B | 180 | 100 | 100 | 100 | 0.85 | Invention Example |
| 171 | B | 190 | 100 | 100 | 100 | 0.86 | Invention Example |
| 172 | B | 200 | 100 | 100 | 100 | 0.84 | Invention Example |
| 173 | B | 250 | 100 | 100 | 100 | 0.84 | Invention Example |
| 174 | B | 260 | 100 | 100 | 100 | 0.86 | Invention Example |
| 175 | B | 270 | 100 | 100 | 100 | 0.86 | Invention Example |
| 176 | B | 280 | 100 | 100 | 100 | 0.84 | Invention Example |
| 177 | B | 290 | 100 | 100 | 100 | 0.86 | Invention Example |
| 178 | B | 300 | 100 | 100 | 100 | 0.86 | Invention Example |
| 179 | B | 310 | 100 | 100 | 100 | 0.85 | Invention Example |
| 180 | B | 320 | 100 | 100 | 100 | 0.85 | Invention Example |
| 181 | B | 330 | 100 | 100 | 100 | 0.86 | Invention Example |
| 182 | B | 340 | 100 | 100 | 100 | 0.86 | Invention Example |
| 183 | B | 350 | 100 | 100 | 100 | 0.83 | Invention Example |
| 184 | B | 360 | 100 | 100 | 100 | 0.90 | Comparative Example |
| 185 | B | 370 | 100 | 100 | 100 | 0.96 | Comparative Example |
| 186 | B | 380 | 100 | 100 | 100 | 0.93 | Comparative Example |
| 187 | B | 390 | 100 | 100 | 100 | 0.91 | Comparative Example |
| 188 | B | 400 | 100 | 100 | 100 | 0.99 | Comparative Example |
| 189 | B | 100 | 110 | 100 | 100 | 0.96 | Comparative Example |
| 190 | B | 100 | 120 | 100 | 100 | 1.00 | Comparative Example |
| 191 | B | 100 | 130 | 100 | 100 | 0.93 | Comparative Example |
| 192 | B | 100 | 140 | 100 | 100 | 0.95 | Comparative Example |
| 193 | B | 100 | 150 | 100 | 100 | 0.80 | Invention Example |
| 194 | B | 100 | 160 | 100 | 100 | 0.81 | Invention Example |
| 195 | B | 100 | 170 | 100 | 100 | 0.81 | Invention Example |
| 196 | B | 100 | 180 | 100 | 100 | 0.81 | Invention Example |
| 197 | B | 100 | 190 | 100 | 100 | 0.80 | Invention Example |
| 198 | B | 100 | 200 | 100 | 100 | 0.80 | Invention Example |
| 199 | B | 100 | 250 | 100 | 100 | 0.81 | Invention Example |
| 200 | B | 100 | 260 | 100 | 100 | 0.80 | Invention Example |
| 201 | B | 100 | 270 | 100 | 100 | 0.80 | Invention Example |
| 202 | B | 100 | 280 | 100 | 100 | 0.80 | Invention Example |
| 203 | B | 100 | 290 | 100 | 100 | 0.81 | Invention Example |
| 204 | B | 100 | 300 | 100 | 100 | 0.80 | Invention Example |
| 205 | B | 100 | 310 | 100 | 100 | 0.81 | Invention Example |
| 206 | B | 100 | 320 | 100 | 100 | 0.81 | Invention Example |
| 207 | B | 100 | 330 | 100 | 100 | 0.81 | Invention Example |
| 208 | B | 100 | 340 | 100 | 100 | 0.80 | Invention Example |
| 209 | B | 100 | 350 | 100 | 100 | 0.81 | Invention Example |
| 210 | B | 100 | 360 | 100 | 100 | 0.91 | Comparative Example |
| 211 | B | 100 | 370 | 100 | 100 | 0.91 | Comparative Example |
| 212 | B | 100 | 380 | 100 | 100 | 0.90 | Comparative Example |
| 213 | B | 100 | 390 | 100 | 100 | 0.99 | Comparative Example |
| 214 | B | 100 | 400 | 100 | 100 | 1.00 | Comparative Example |

**[Table 3-6]**

| Steel Sheet 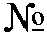 | Steel Symbol | Steel Sheet Temperature(°C) at Final Cold Rolling | | | | Iron Loss W_{17/50} (W/kg) | Remarks |
|---|---|---|---|---|---|---|---|
| | | First Pass | Second Pass | Third Pass | Forth Pass | | |
| 215 | B | 100 | 100 | 110 | 100 | 0.97 | Comparative Example |
| 216 | B | 100 | 100 | 120 | 100 | 0.93 | Comparative Example |
| 217 | B | 100 | 100 | 130 | 100 | 0.95 | Comparative Example |
| 218 | B | 100 | 100 | 140 | 100 | 0.89 | Comparative Example |
| 219 | B | 100 | 100 | 150 | 100 | 0.81 | Invention Example |
| 220 | B | 100 | 100 | 160 | 100 | 0.81 | Invention Example |
| 221 | B | 100 | 100 | 170 | 100 | 0.80 | Invention Example |
| 222 | B | 100 | 100 | 180 | 100 | 0.80 | Invention Example |
| 223 | B | 100 | 100 | 190 | 100 | 0.80 | Invention Example |
| 224 | B | 100 | 100 | 200 | 100 | 0.80 | Invention Example |
| 225 | B | 100 | 100 | 250 | 100 | 0.80 | Invention Example |
| 226 | B | 100 | 100 | 260 | 100 | 0.80 | Invention Example |
| 227 | B | 100 | 100 | 270 | 100 | 0.81 | Invention Example |
| 228 | B | 100 | 100 | 280 | 100 | 0.80 | Invention Example |
| 229 | B | 100 | 100 | 290 | 100 | 0.81 | Invention Example |
| 230 | B | 100 | 100 | 300 | 100 | 0.81 | Invention Example |
| 231 | B | 100 | 100 | 310 | 100 | 0.80 | Invention Example |
| 232 | B | 100 | 100 | 320 | 100 | 0.80 | Invention Example |
| 233 | B | 100 | 100 | 330 | 100 | 0.81 | Invention Example |
| 234 | B | 100 | 100 | 340 | 100 | 0.81 | Invention Example |
| 235 | B | 100 | 100 | 350 | 100 | 0.80 | Invention Example |
| 236 | B | 100 | 100 | 360 | 100 | 0.90 | Comparative Example |
| 237 | B | 100 | 100 | 370 | 100 | 1.00 | Comparative Example |
| 238 | B | 100 | 100 | 380 | 100 | 0.93 | Comparative Example |
| 239 | B | 100 | 100 | 390 | 100 | 1.00 | Comparative Example |
| 240 | B | 100 | 100 | 400 | 100 | 0.90 | Comparative Example |
| 241 | B | 100 | 100 | 100 | 110 | 0.93 | Comparative Example |
| 242 | B | 100 | 100 | 100 | 120 | 0.97 | Comparative Example |
| 243 | B | 100 | 100 | 100 | 130 | 0.93 | Comparative Example |
| 244 | B | 100 | 100 | 100 | 140 | 0.94 | Comparative Example |
| 245 | B | 100 | 100 | 100 | 150 | 0.80 | Invention Example |
| 246 | B | 100 | 100 | 100 | 160 | 0.80 | Invention Example |
| 247 | B | 100 | 100 | 100 | 170 | 0.80 | Invention Example |
| 248 | B | 100 | 100 | 100 | 180 | 0.80 | Invention Example |
| 249 | B | 100 | 100 | 100 | 190 | 0.81 | Invention Example |
| 250 | B | 100 | 100 | 100 | 200 | 0.80 | Invention Example |
| 251 | B | 100 | 100 | 100 | 250 | 0.81 | Invention Example |
| 252 | B | 100 | 100 | 100 | 260 | 0.81 | Invention Example |
| 253 | B | 100 | 100 | 100 | 270 | 0.81 | Invention Example |
| 254 | B | 100 | 100 | 100 | 280 | 0.81 | Invention Example |
| 255 | B | 100 | 100 | 100 | 290 | 0.80 | Invention Example |
| 256 | B | 100 | 100 | 100 | 300 | 0.81 | Invention Example |
| 257 | B | 100 | 100 | 100 | 310 | 0.81 | Invention Example |
| 258 | B | 100 | 100 | 100 | 320 | 0.81 | Invention Example |
| 259 | B | 100 | 100 | 100 | 330 | 0.80 | Invention Example |
| 260 | B | 100 | 100 | 100 | 340 | 0.81 | Invention Example |
| 261 | B | 100 | 100 | 100 | 350 | 0.80 | Invention Example |
| 262 | B | 100 | 100 | 100 | 360 | 0.93 | Comparative Example |
| 263 | B | 100 | 100 | 100 | 370 | 0.95 | Comparative Example |
| 264 | B | 100 | 100 | 100 | 380 | 0.95 | Comparative Example |
| 265 | B | 100 | 100 | 100 | 390 | 0.93 | Comparative Example |
| 266 | B | 100 | 100 | 100 | 400 | 0.95 | Comparative Example |

**[Table 3-7]**

| Steel Sheet 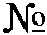 | Steel Symbol | Steel Sheet Temperature(°C) of Final Cold Rolling | | | | Iron Loss W_{17/50} (W/kg) | Remarks |
|---|---|---|---|---|---|---|---|
| | | First Pass | Second Pass | Third Pass | Forth Pass | | |
| 267 | B | 150 | 150 | 50 | 50 | 0.87 | Invention Example |
| 268 | B | 200 | 200 | 50 | 50 | 0.85 | Invention Example |
| 269 | B | 300 | 300 | 50 | 50 | 0.85 | Invention Example |
| 270 | B | 350 | 350 | 50 | 50 | 0.86 | Invention Example |
| 271 | B | 150 | 50 | 350 | 50 | 0.80 | Invention Example |
| 272 | B | 200 | 50 | 300 | 50 | 0.80 | Invention Example |
| 273 | B | 300 | 50 | 200 | 50 | 0.80 | Invention Example |
| 274 | B | 350 | 50 | 150 | 50 | 0.80 | Invention Example |
| 275 | B | 150 | 50 | 50 | 150 | 0.81 | Invention Example |
| 276 | B | 200 | 50 | 50 | 200 | 0.80 | Invention Example |
| 277 | B | 300 | 50 | 50 | 300 | 0.80 | Invention Example |
| 278 | B | 350 | 50 | 50 | 350 | 0.80 | Invention Example |
| 279 | B | 50 | 150 | 150 | 50 | 0.81 | Invention Example |
| 280 | B | 50 | 200 | 200 | 50 | 0.81 | Invention Example |
| 281 | B | 50 | 300 | 300 | 50 | 0.81 | Invention Example |
| 282 | B | 50 | 350 | 350 | 50 | 0.80 | Invention Example |
| 283 | B | 50 | 150 | 50 | 150 | 0.80 | Invention Example |
| 284 | B | 50 | 200 | 50 | 200 | 0.81 | Invention Example |
| 285 | B | 50 | 300 | 50 | 300 | 0.81 | Invention Example |
| 286 | B | 50 | 350 | 50 | 350 | 0.81 | Invention Example |
| 287 | B | 50 | 50 | 150 | 150 | 0.80 | Invention Example |
| 288 | B | 50 | 50 | 200 | 200 | 0.80 | Invention Example |
| 289 | B | 50 | 50 | 300 | 300 | 0.80 | Invention Example |
| 290 | B | 50 | 50 | 350 | 350 | 0.81 | Invention Example |
| 291 | B | 150 | 350 | 150 | 50 | 0.87 | Invention Example |
| 292 | B | 200 | 300 | 200 | 50 | 0.84 | Invention Example |
| 293 | B | 300 | 200 | 300 | 50 | 0.84 | Invention Example |
| 294 | B | 350 | 150 | 350 | 50 | 0.85 | Invention Example |
| 295 | B | 150 | 350 | 50 | 150 | 0.81 | Invention Example |
| 296 | B | 200 | 300 | 50 | 200 | 0.81 | Invention Example |
| 297 | B | 300 | 200 | 50 | 300 | 0.80 | Invention Example |
| 298 | B | 350 | 150 | 50 | 350 | 0.80 | Invention Example |
| 299 | B | 150 | 50 | 150 | 150 | 0.81 | Invention Example |
| 300 | B | 200 | 50 | 200 | 200 | 0.81 | Invention Example |
| 301 | B | 300 | 50 | 300 | 300 | 0.80 | Invention Example |
| 302 | B | 350 | 50 | 350 | 350 | 0.81 | Invention Example |
| 303 | B | 50 | 150 | 150 | 150 | 0.80 | Invention Example |
| 304 | B | 50 | 200 | 200 | 200 | 0.80 | Invention Example |
| 305 | B | 50 | 300 | 300 | 300 | 0.81 | Invention Example |
| 306 | B | 50 | 350 | 350 | 350 | 0.81 | Invention Example |
| 307 | B | 150 | 150 | 150 | 150 | 0.84 | Invention Example |
| 308 | B | 200 | 200 | 200 | 200 | 0.84 | Invention Example |
| 309 | B | 300 | 300 | 300 | 300 | 0.85 | Invention Example |
| 310 | B | 350 | 350 | 350 | 350 | 0.85 | Invention Example |

**[Table 3-8]**

| Steel Sheet 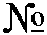 | Steel Symbol | Steel Sheet Temperature(°C) at Final Cold Rolling | | | | Iron Loss W_{17/50} (W/kg) | Remarks |
|---|---|---|---|---|---|---|---|
| | | First Pass | Second Pass | Third Pass | Forth Pass | | |
| 311 | B | 0 | 200 | 200 | 200 | 0.86 (Frequent Cracking During Cold Rolling) | Invention Example |
| 312 | B | 10 | 200 | 200 | 200 | 0.86 (Frequent Cracking During Cold Rolling) | Invention Example |
| 313 | B | 20 | 200 | 200 | 200 | 0.85 (Frequent Cracking During Cold Rolling) | Invention Example |
| 314 | B | 30 | 200 | 200 | 200 | 0.80 | Invention Example |
| 315 | B | 40 | 200 | 200 | 200 | 0.81 | Invention Example |
| 316 | B | 50 | 200 | 200 | 200 | 0.80 | Invention Example |
| 317 | B | 100 | 200 | 200 | 200 | 0.80 | Invention Example |
| 318 | B | 110 | 200 | 200 | 200 | 0.80 | Invention Example |
| 319 | B | 120 | 200 | 200 | 200 | 0.80 | Invention Example |
| 320 | B | 130 | 200 | 200 | 200 | 0.81 | Invention Example |
| 321 | B | 140 | 200 | 200 | 200 | 0.87 | Invention Example |
| 322 | B | 150 | 200 | 200 | 200 | 0.84 | Invention Example |

### Example 5

Cold-rolled sheets with a thickness of 0.20 mm were formed by using the slab A and the slab B used in Example 4 above as materials and performing the final cold-rolling step under the conditions (the temperature of the steel sheet on the entry side in the first pass: 300°C, and the temperature of the steel sheet on the entry side in each of the second to fourth passes: 100°C) of No. 17 (where the slab A was used) and No. 178 (where the slab B was used) shown in Table 3. The cold -rolled sheets were then subjected to decarburization annealing also acting as primary recrystallization annealing at a soaking temperature of 840°C for a soaking time of 100 seconds. During the heating step of the decarburization annealing, rapid heating was performed at an average heating rate of 300°C/s in the temperature range of 400°C to the temperature T, and further, the temperature T was varied in the range of 650°C to 950°C. In addition, at a time when the temperature of the sheet reached 550°C during the rapid heating, the output of the heating device was adjusted so as to reduce the heating rate to 100°C/s for 0.2 seconds. Note that under the condition in which the temperature T was 860°C or higher, rapid heating was performed up to the temperature T, and then the steel sheet was cooled to a temperature of 840°C with nitrogen gas and then held at 840°C for 100 seconds.

Next, an annealing separating agent was applied to the surface of the cold-rolled steel sheet subjected to the decarburization annealing as in Example 1, followed by finishing annealing to cause secondary recrystallization. Unreacted portions of the annealing separating agent were removed from the surface of the steel sheet subjected to the finishing annealing. An insulation coating solution containing phosphate, chromate, and colloidal silica in a mass ratio of 3:1:2 was then applied to the surface of the steel sheet, and then, followed by flattening annealing at 800°C for 30 seconds to obtain a product sheet.

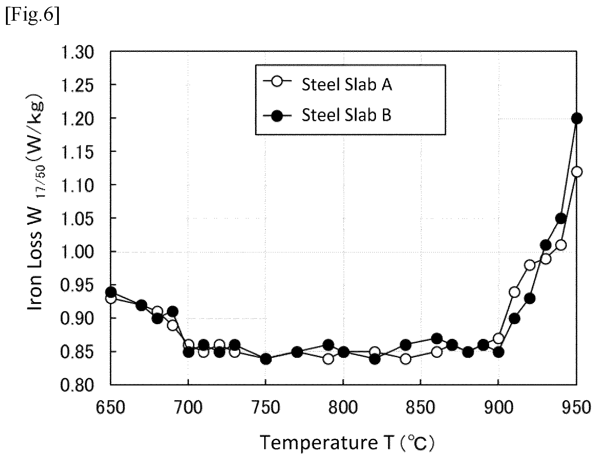

An Epstein test piece was taken from the thus-obtained product sheet to measure the iron loss W_{17/50} in accordance with JIS C 2550. Fig. 6 shows the measurement results; each of the steel sheets heated under the condition that the end temperature T of the rapid heating is set in the range of 700 to 900°C has the iron loss W_{17/50} reduced to the reference value of 0.87 W/kg or less.

### Example 6

A steel with a component composition containing no inhibitor-forming component, specifically, containing C: 0.036 mass%, Si: 3.4 mass%, Mn: 0.06 mass%, Al: 0.0072 mass%, N: 0.0050 mass%, S: 0.0031 mass%, and Se: 0.0031 mass%, and also containing, as the other components, Sb, Cu, P, Cr, Ni, Sn, Nb, Mo, B, and Bi with the composition shown in Table 4, with the balance being Fe and unavoidable impurities, was melted to form a steel slab. The slab was next heated to 1210°C and then hot rolled to form a hot-rolled sheet with a thickness of 2.0 mm. The hot-rolled sheet was then subjected to hot-band annealing at 1000°C for 60 seconds and then to cold rolling once (final cold-rolling step) by a tandem rolling mill to obtain a cold-rolled sheet with a final thickness of 0.20 mm. All of the passes of the final cold-rolling step were performed as warm rolling with the temperature of the steel sheet on the entry side set to 170°C.

The cold-rolled sheet was then subjected to decarburization annealing, which also serves as primary recrystallization annealing, at a soaking temperature of 840°C for a soaking time of 100 seconds. During a heating step of the decarburization annealing, rapid heating was performed at an average heating rate of 260°C/s in the temperature range of 400°C to 710°C by the transverse induction heating device shown in Fig. 3, and at a time when the temperature of the steel sheet reached 550°C, adjustment was made to reduce the heating rate to 100°C/s for 0.2 seconds. Next, an annealing separating agent mainly composed of MgO was applied to the surface of the cold-rolled steel sheet subjected to the decarburization annealing, followed by finishing annealing for causing secondary recrystallization. Then, unreacted portions of the annealing separating agent were removed from the surface of the steel sheet subjected to the finishing annealing. Then, an insulation coating solution containing phosphate, chromate, and colloidal silica in a mass ratio of 3:1:2 was applied to the surface of the steel sheet, followed by flattening annealing at 800°C for 30 seconds to obtain a product sheet.

An Epstein test piece was obtained from the thus-obtained product sheet to measure the iron loss W_{17/50} in accordance with JIS C 2550. Table 4 shows the measurement results; each of the product sheets formed by using as a material a steel slab to which at least one element selected from the group consisting of Sb, Cu, P, Cr, Ni, Sn, Nb, Mo, B, and Bi is added and by performing rapid heating by a transverse induction heating device under the conditions compliant with the present invention in the heating step of the decarburization annealing, has an iron loss W_{17/50} of 0.80 W/kg or less, which is the reference value or less, and thus, the sheet has excellent magnetic properties.

**[Table 4]**

| Steel Symbol | Other Added Elements (mass%) | | | | | | | | | | Iron Loss W_{17/50} (W/kg) | Remarks |
|---|---|---|---|---|---|---|---|---|---|---|---|---|
| | Sb | Cu | P | Cr | Ni | Sn | Nb | Mo | B | Bi | | |
| C | - | - | - | - | - | - | - | - | - | - | 0.85 | Invention Example |
| D | 0.01 | 0.05 | 0.05 | - | - | - | - | - | - | - | 0.79 | Invention Example |
| E | 0.01 | - | - | - | 0.050 | - | 0.005 | - | - | - | 0.77 | Invention Example |
| F | 0.14 | - | - | - | - | - | - | 0.22 | 0.004 | - | 0.77 | Invention Example |
| G | 0.35 | 0.22 | 0.12 | - | - | 0.12 | - | - | - | - | 0.78 | Invention Example |
| H | - | 0.05 | 0.05 | 0.02 | - | - | - | - | - | - | 0.77 | Invention Example |
| I | - | 0.78 | - | - | - | 0.43 | - | 0.37 | - | - | 0.79 | Invention Example |
| J | - | 1.31 | - | 0.27 | 0.420 | - | - | - | - | - | 0.76 | Invention Example |
| K | - | - | 0.30 | - | - | - | 0.002 | - | 0.005 | 0.0020 | 0.78 | Invention Example |
| L | - | - | - | 1.01 | - | - | - | - | - | - | 0.78 | Invention Example |
| M | 0.42 | - | - | 1.31 | 0.890 | - | - | - | - | - | 0.76 | Invention Example |
| O | - | - | - | - | 1.350 | - | - | - | - | - | 0.79 | Invention Example |
| P | - | - | 0.42 | - | 0.007 | - | - | 0.11 | - | 0.0010 | 0.78 | Invention Example |
| Q | - | - | - | - | - | - | - | - | - | 0.0007 | 0.79 | Invention Example |
| R | - | - | - | - | 0.050 | 0.02 | 0.005 | - | - | - | 0.79 | Invention Example |
| S | - | - | - | - | - | - | - | 0.02 | 0.002 | 0.0100 | 0.78 | Invention Example |
| T | - | 0.05 | 0.05 | - | 0.050 | - | - | - | - | - | 0.77 | Invention Example |
| U | - | - | - | - | - | 0.02 | 0.005 | - | - | 0.0100 | 0.79 | Invention Example |
| V | - | - | - | 0.02 | - | - | - | 0.02 | 0.002 | - | 0.79 | Invention Example |
| W | - | 0.05 | - | - | - | 0.02 | - | - | - | 0.0100 | 0.78 | Invention Example |
| X | - | - | - | 0.02 | - | 0.02 | - | 0.02 | - | - | 0.77 | Invention Example |
| Y | - | - | 0.05 | - | - | - | - | - | - | - | 0.78 | Invention Example |
| Z | - | - | - | - | 0.050 | - | - | - | - | - | 0.79 | Invention Example |
| AA | - | - | - | - | - | - | - | - | 0.002 | - | 0.78 | Invention Example |

## Claims

1. A method for producing a grain-oriented electrical steel sheet, comprising:
hot rolling a steel material to obtain a hot-rolled sheet;
subjecting the hot-rolled sheet to one cold-rolling step, or two or more cold-rolling steps with intermediate annealing interposed between each cold rolling step so as to obtain a cold-rolled sheet with a final thickness; and
subjecting the cold-rolled sheet to decarburization annealing which also serves as primary recrystallization annealing and then to finishing annealing,
**characterized in that**
a final cold-rolling step of the cold rolling includes at least one rolling pass or more performed with a temperature of the steel sheet set in a range of 150°C to 350°C inclusive, and
the decarburization annealing includes a heating step in which the steel sheet is heated at an average heating rate of 250°C/s or more from 400°C to a temperature T(°C) of 700 to 900°C and then held at a heating rate of 2/3 of the average heating rate or less in any of temperature ranges between 500°C and 700°C for a time of 0.10 seconds or more but less than 1.00 seconds.

2. The method for producing a grain-oriented electrical steel sheet according to claim 1, wherein
the final cold-rolling step includes at least one rolling pass or more performed in a temperature range of 30°C to 130°C inclusive, and at least one rolling pass or more performed thereafter in a temperature range of 150°C to 350°C inclusive.

3. The method for producing a grain-oriented electrical steel sheet according to claim 1 or 2, wherein
the steel material has a component composition containing elements of the following group A or B, with a balance being Fe and unavoidable impurities:
- group A: C: 0.01 to 0.10 mass%, Si: 2.0 to 4.5 mass%, Mn: 0.01 to 0.50 mass%, Al: 0.0100 to 0.0400 mass%, N: 0.0050 to 0.0120 mass%, and at least one of S and Se: a total of 0.01 to 0.05 mass%, and
- group B: C: 0.01 to 0.10 mass%, Si: 2.0 to 4.5 mass%, Mn: 0.01 to 0.50 mass%, Al: less than 0.0100 mass%, N: 0.0050 mass% or less, S: 0.0070 mass% or less, and Se: 0.0070 mass% or less.

4. The method for producing a grain-oriented electrical steel sheet according to claim 3, wherein
the steel material further includes, in addition to the component composition, at least one element selected from the group consisting of Sb: 0.500 mass% or less, Cu: 1.50 mass% or less, P: 0.500 mass% or less, Cr: 1.50 mass% or less, Ni: 1.500 mass% or less, Sn: 0.50 mass% or less, Nb: 0.0100 mass% or less, Mo: 0.50 mass% or less, B: 0.0070 mass% or less, and Bi: 0.0500 mass% or less.

5. The method for producing a grain-oriented electrical steel sheet according to any one of claims 1 to 4, wherein
the rapid heating in the decarburization annealing is performed using a transverse induction heating device.

6. A transverse induction heating device for use in the method for producing a grain-oriented electrical steel sheet according to claim 5, comprising a heating coil having a shape of a rounded rectangle including two parallel lines of equal length lying along a sheet width direction, and two semicircles,
wherein
relationships of R₁≥w and R₂<v are satisfied, where R₁ represents a maximum inner diameter (m) of the heating coil in the sheet width direction, R₂ represents a maximum inner diameter (m) of the heating coil in a threading direction, w represents a width (m) of the steel sheet, and v represents a threading speed (m/s) of the steel sheet.
